(19)

Europäisches Patentamt
European Patent Office
Office européen des brevets

(11) **EP 4 497 638 A1**

(12) **EUROPEAN PATENT APPLICATION**

(43) Date of publication:
**29.01.2025 Bulletin 2025/05**

(21) Application number: **24190280.8**

(22) Date of filing: **23.07.2024**

(51) International Patent Classification (IPC):
**B60R 16/033** (2006.01)     **B60L 58/12** (2019.01)
**B60L 58/14** (2019.01)     **B62D 5/04** (2006.01)

(52) Cooperative Patent Classification (CPC):
**B62D 5/0481; B60L 58/12; B60L 58/14;
B60R 16/033**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **26.07.2023 JP 2023121519**

(71) Applicant: **JTEKT CORPORATION**
**Kariya-shi, Aichi-ken, 448-8652 (JP)**

(72) Inventors:
  • **HIBINO, Tokuaki**
    **Kariya-shi, Aichi-ken,, 448-8652 (JP)**
  • **SATO, Fumihiko**
    **Kariya-shi, Aichi-ken,, 448-8652 (JP)**
  • **NITTA, Hiroki**
    **Kariya-shi, Aichi-ken,, 448-8652 (JP)**

  • **OTA, Kohei**
    **Kariya-shi, Aichi-ken,, 448-8652 (JP)**
  • **MIO, Takumi**
    **Kariya-shi, Aichi-ken,, 448-8652 (JP)**
  • **INABA, Daiki**
    **Kariya-shi, Aichi-ken,, 448-8652 (JP)**
  • **SATOU, Atsushi**
    **Toyota-shi, Aichi-ken,, 471-8571 (JP)**
  • **YAMASHITA, Masaharu**
    **Toyota-shi, Aichi-ken,, 471-8571 (JP)**
  • **YAMASHITA, Yosuke**
    **Toyota-shi, Aichi-ken,, 471-8571 (JP)**
  • **HORA, Yasushi**
    **Toyota-shi, Aichi-ken,, 471-8571 (JP)**

(74) Representative: **Winter, Brandl - Partnerschaft
mbB
Alois-Steinecker-Straße 22
85354 Freising (DE)**

(54) **POWER SOURCE APPARATUS**

(57)     A power source apparatus (10) includes: an auxiliary power source (10A); and a control circuit (10C) configured to control charging and discharging of the auxiliary power source (10A). The control circuit (10C) is configured to, after completion of the initial check, charge the auxiliary power source (10A) after waiting for traveling preparation of the vehicle to be completed. The control circuit (10C) is configured to, after the completion of the initial check, charge the auxiliary power source (10A) when both of a first condition and a second condition are satisfied even before the completion of the traveling preparation of the vehicle. The first condition is a condition in which an amount of elapsed time from when the initial check is completed is equal to or more than a time threshold. The second condition is a condition in which voltage across the auxiliary power source (10A) is less than a voltage threshold.

FIG. 1

EP 4 497 638 A1

**Description**

BACKGROUND OF THE INVENTION

1. Field of the Invention

The present disclosure relates to a power source apparatus.

2. Description of Related Art

A power source apparatus has been known that backs up electricity feeding to an electricity feeding target by an auxiliary power source when a main power source fails. For example, a power source apparatus in Japanese Unexamined Patent Application Publication No. 2023-18841 is provided in an electricity feeding path between a main power source and a steering control device of a vehicle. The power source apparatus has an auxiliary power source and a charging circuit. The auxiliary power source is a lithium ion capacitor, for example. The charging circuit is a circuit for charging the auxiliary power source.

SUMMARY OF THE INVENTION

The auxiliary power source has a self-discharge property. Therefore, even in a state in which the auxiliary power source is not used, the available amount of the auxiliary power source gradually decreases with the elapse of time. Therefore, when the auxiliary power source is not charged for a long period of time for some reason, there is a fear that the auxiliary power source reaches an overdischarged state. When the overdischarged state continues for a long period of time, there is a fear that the deterioration of the auxiliary power source is facilitated. The present disclosure provides a power source apparatus that reduces the deterioration of an auxiliary power source due to overdischarge.

A power source apparatus according to an aspect of the present disclosure includes: an auxiliary power source; and a control circuit. The auxiliary power source is configured to backup an in-vehicle main power source configured to supply electricity to an electricity feeding target. The control circuit is configured to control charging of the auxiliary power source by electricity from the main power source and discharging of the auxiliary power source. The control circuit is configured to execute an initial check that is an initial-stage inspection at the time of activation when a power switch of a vehicle is turned ON. The control circuit is configured to, after completion of the initial check, charge the auxiliary power source after waiting for traveling preparation of the vehicle to be completed. The control circuit is configured to, after the completion of the initial check, charge the auxiliary power source when both of a first condition and a second condition are satisfied even before the completion of the traveling preparation of the vehicle. The first condition is a condition in which an amount of elapsed time from when the initial check is completed is equal to or more than a time threshold. The second condition is a condition in which voltage across the auxiliary power source is less than a voltage threshold.

A case in which the traveling preparation of the vehicle is not completed for a long period of time for some reason is conceived. In this case, discharging or electricity consumption of the auxiliary power source progresses, and there is a fear that the auxiliary power source reaches an overdischarged state in a period of time from when the power switch is turned ON to when the traveling preparation of the vehicle is completed. Regarding this point, according to the configuration described above, the auxiliary power source is charged when the amount of elapsed time from when the initial check is completed is equal to or more than the time threshold and the voltage across the auxiliary power source is less than the voltage threshold even before the completion of the traveling preparation of the vehicle when the power switch is turned ON. Therefore, cases in which the discharging or the electricity consumption of the auxiliary power source progresses and the auxiliary power source reaches the overdischarged state in the period of time from when the power switch is turned ON to when the traveling preparation of the vehicle is completed can be reduced. Therefore, the deterioration of the auxiliary power source due to overdischarge can be reduced.

In the power source apparatus according to the aspect of the present disclosure, the auxiliary power source may have output voltage lower than output voltage of the main power source and be configured to be charged by voltage across the main power source stepped down by an in-vehicle DC-DC converter. The traveling preparation of the vehicle may include activation processing of the DC-DC converter.

According to this configuration, the auxiliary power source is charged by the voltage across the main power source stepped down by the DC-DC converter. Therefore, it is basically preferred that the auxiliary power source be charged after the activation of the DC-DC converter is waited for when the power switch is turned ON.

In the power source apparatus according to the aspect of the present disclosure, the voltage threshold may be set to a minimum voltage value necessary for backup of the main power source.

The auxiliary power source is charged by the electricity of the main power source. Therefore, the electricity of the main power source is consumed when the auxiliary power source is charged. Regarding this point, according to the configuration described above, the period of time from when the initial check by the control circuit is completed to when the second condition in which the voltage across the auxiliary power source is less than the voltage threshold is satisfied can be caused to be longer as compared to a case in which the voltage threshold is set to a value greater than the minimum voltage value necessary for the backup of the main power source. Therefore, the electricity consumption of the main power source before the activation of the DC-DC converter can be reduced.

In the power source apparatus according to the aspect of the present disclosure, the electricity feeding target may be a control apparatus of the vehicle configured to transmit a charging permission signal to the control circuit when the traveling preparation of the vehicle is completed. The control circuit may be configured to recognize that the traveling preparation of the vehicle is completed when the charging permission signal is received.

According to this configuration, the control circuit can easily recognize that the traveling preparation of the vehicle is completed by receiving the charging permission signal from the control apparatus of the vehicle. In the power source apparatus according to the aspect of the present disclosure, the control apparatus may be a steering control device configured to control a motor that is a driving source of a steering apparatus of the vehicle.

A higher reliability is required for the steering control device. The power source apparatus is suitable for a steering control device.

According to the power source apparatus of the present disclosure, it becomes possible to reduce the deterioration of the auxiliary power source due to overdischarge.

BRIEF DESCRIPTION OF THE DRAWINGS

Features, advantages, and technical and industrial significance of exemplary embodiments of the invention will be described below with reference to the accompanying drawings, in which like signs denote like elements, and wherein:

  FIG. 1 is a block diagram of a vehicle power source system including a power source apparatus and a steering control device according to one embodiment;
  FIG. 2 is a flowchart showing one example of processing executed by a control circuit of the power source apparatus according to one embodiment; and
  FIG. 3 is a graph showing a voltage usage range of an auxiliary power source according to one embodiment.

DETAILED DESCRIPTION OF EMBODIMENTS

One embodiment of a power source apparatus is described below.

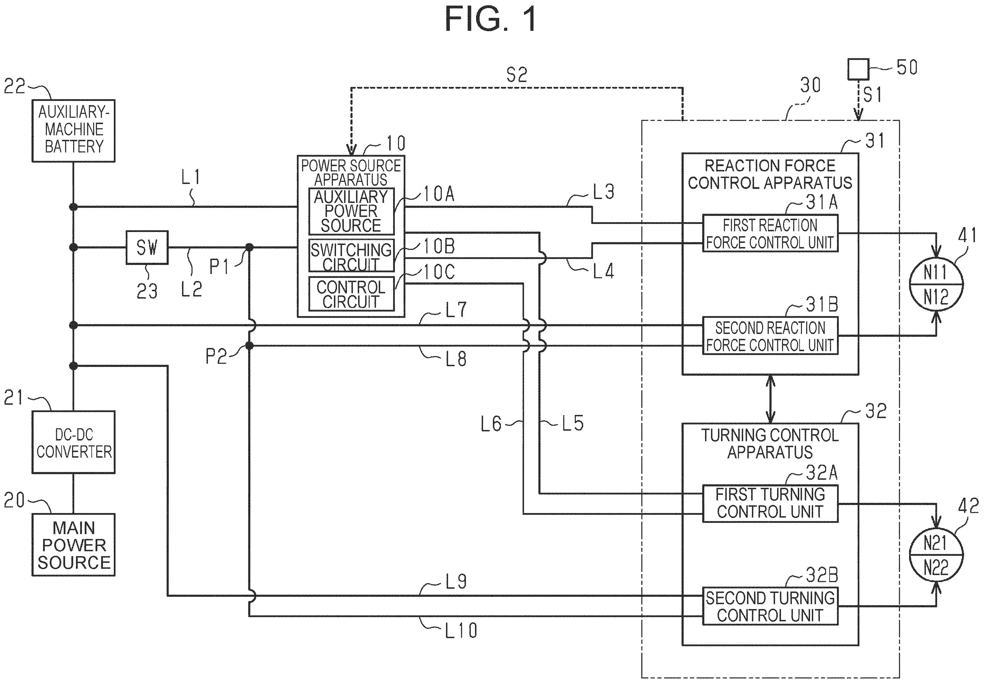

As shown in FIG. 1, a power source apparatus 10 is provided in an electricity feeding path between a main power source 20 and a steering control device 30 that is an electricity feeding target. The main power source 20 is connected to the power source apparatus 10 via a DC-DC converter 21. The power source apparatus 10 is positioned between the DC-DC converter 21 and the steering control device 30 and backs up the main power source 20. The expression of "DC" is an abbreviation of "Direct Current" and means "direct current". The main power source 20 is also connected to an auxiliary-machine battery 22 via the DC-DC converter 21.

The main power source 20 is a lithium ion battery or a nickel hydride battery, for example. The main power source 20 is an in-vehicle power source backed up by the power source apparatus 10. The DC-DC converter 21 steps down the output voltage across the main power source 20. The electricity from the DC-DC converter 21 is supplied to the steering control device 30 via the power source apparatus 10.

The auxiliary-machine battery 22 is a lead storage battery, for example. The output voltage across the auxiliary-machine battery 22 is lower than the output voltage across the main power source 20. The DC-DC converter 21 steps down the output voltage across the main power source 20 and charges the auxiliary-machine battery 22 by the stepped-down voltage. The electricity of the auxiliary-machine battery 22 is supplied to in-vehicle auxiliary machinery.

The steering control device 30 is one of control apparatuses of the vehicle. The steering control device 30 controls a motor that is a driving source of a steering apparatus of the vehicle. The steering apparatus is a steer-by-wire steering apparatus, for example, and the motive power transmission between a steering wheel and turning wheels is separated. The motor includes a reaction force motor 41 and a turning motor 42.

The reaction force motor 41 is a generation source of a steering reaction force. The steering reaction force is a force in the opposite direction from the operation direction of the steering wheel. The reaction force motor 41 is a three-phase brushless motor, for example, and has two systems of winding groups. The winding groups include a first system winding group N11 and a second system winding group N12. The torque of the reaction force motor 41 is applied to a steering shaft via a decelerator.

The turning motor 42 is a generation source of a turning force. The turning force is a force for turning the turning wheels of the vehicle. The turning motor 42 is a three-phase brushless motor, for example, and has two systems of winding groups. The winding groups include a first system winding group N21 and a second system winding group N22. The torque of the turning motor 42 is applied to a turning shaft via the decelerator. The turning shaft turns the turning wheels.

The steering control device 30 has a reaction force control apparatus 31 and a turning control apparatus 32. The reaction force control apparatus 31 and the turning control apparatus 32 exchange information with each other via a communication line (not shown).

The reaction force control apparatus 31 controls electricity feeding with respect to the reaction force motor 41. The reaction force control apparatus 31 has a first reaction force control unit 31A and a second reaction force control unit 31B. The first reaction force control unit 31A controls electricity feeding with respect to the first system winding group N11 of the reaction force motor 41. The second reaction force control unit 31B controls electricity feeding with respect to the second system winding group N12 of the reaction force motor 41.

The turning control apparatus 32 controls electricity feeding with respect to the turning motor 42. The turning control apparatus 32 has a first turning control unit 32A and a second turning control unit 32B. The first turning control unit 32A controls electricity feeding with respect to the first system winding group N21 of the turning motor 42. The second turning control unit 32B controls electricity feeding with respect to the second system winding group N22 of the turning motor 42.

Electricity Feeding Path

Next, an electricity feeding path between the main power source 20 and the steering control device 30 is described.

As shown in FIG. 1, the power source apparatus 10 is connected to the DC-DC converter 21 via a first power source line L1. The power source apparatus 10 is connected to the DC-DC converter 21 via a second power source line L2. A power switch 23 is provided in the second power source line L2. The power switch 23 includes an ignition switch, for example, and is operated when a traveling driving source of the vehicle is started or stopped. The traveling driving source is an engine or a traveling motor, for example. The conduction of the second power source line L2 is switched between ON and OFF through the operation of the power switch 23.

The first reaction force control unit 31A is connected to the DC-DC converter 21 via the power source apparatus 10. The first reaction force control unit 31A is connected to the power source apparatus 10 via a third power source line L3. The third power source line L3 branches from the first power source line L1 on the inside of the power source apparatus 10. The first reaction force control unit 31A is connected to the power source apparatus 10 via a fourth power source line L4. The fourth power source line L4 branches from the second power source line L2 on the inside of the power source apparatus 10.

The electricity from the DC-DC converter 21 is supplied to a power circuit of the first reaction force control unit 31A via the first power source line L1, the power source apparatus 10, and the third power source line L3. The power circuit is an electric circuit that handles greater electricity and includes an inverter that converts direct-current electricity from the DC-DC converter 21 to alternating-current electricity, for example. The electricity from the DC-DC converter 21 is supplied to a control circuit of the first reaction force control unit 31A via the second power source line L2, the power source apparatus 10, and the fourth power source line L4. The control circuit is an electric circuit for controlling the reaction force motor 41 and includes a central processing unit (CPU) and a memory, for example. The memory includes a random access memory (RAM) and a read only memory (ROM).

The first turning control unit 32A is connected to the DC-DC converter 21 via the power source apparatus 10. The first turning control unit 32A is connected to the power source apparatus 10 via a fifth power source line L5. The fifth power source line L5 branches from the first power source line L1 on the inside of the power source apparatus 10. The first turning control unit 32A is connected to the power source apparatus 10 via a sixth power source line L6. The sixth power source line L6 branches from the second power source line L2 on the inside of the power source apparatus 10.

The electricity from the DC-DC converter 21 is supplied to a power circuit of the first turning control unit 32A via the first power source line L1, the power source apparatus 10, and the fifth power source line L5. The electricity from the DC-DC converter 21 is supplied to a control circuit of the first turning control unit 32A via the second power source line L2, the power source apparatus 10, and the sixth power source line L6.

The second reaction force control unit 31B is connected to the DC-DC converter 21 without passing through the power source apparatus 10. The second reaction force control unit 31B is connected to the DC-DC converter 21 via a seventh power source line L7. The second reaction force control unit 31B is connected to the DC-DC converter 21 via an eighth power source line L8. When described in detail, the second reaction force control unit 31B is connected to a first connection point P1 set in the second power source line L2 via the eighth power source line L8. The first connection point P1 is set between the power switch 23 and the power source apparatus 10 in the second power source line L2.

The electricity from the DC-DC converter 21 is supplied to a power circuit of the second reaction force control unit 31B via the seventh power source line L7. The electricity from the DC-DC converter 21 is supplied to a control circuit of the second reaction force control unit 31B via a part of the second power source line L2 and the eighth power source line L8.

The second turning control unit 32B is connected to the DC-DC converter 21 without passing through the power source apparatus 10. The second turning control unit 32B is connected to the DC-DC converter 21 via a ninth power source line L9. The second turning control unit 32B is connected to the DC-DC converter 21 via a tenth power source line L10. When described in detail, the second turning control unit 32B is connected to a second connection point P2 set in the eighth power source line L8 via the ninth power source line L9.

The electricity from the DC-DC converter 21 is supplied to a power circuit of the second turning control unit 32B via the ninth power source line L9. The electricity from the DC-DC converter 21 is supplied to a control circuit of the second turning control unit 32B via a part of the second power source line L2, a part of the eighth power source line L8, and the tenth power source line L10.

The main power source 20, the DC-DC converter 21, the auxiliary-machine battery 22, the power source apparatus 10, and the steering control device 30 configure a vehicle power source system.

Power Source Apparatus

Next, the configuration of the power source apparatus 10 is described.

The power source apparatus 10 has an auxiliary power source 10A, a switching circuit 10B, and a control circuit 10C.

The auxiliary power source 10A is an electricity storage apparatus capable of charging and discharging electric charges and is a lithium ion capacitor or a lithium ion battery, for example. The voltage across the auxiliary power source 10A is higher than a lower limit value of the voltage necessary at the time of backup of the auxiliary-machine battery 22, in other words, a lower limit value of the voltage necessary to suitably operate the steering control device 30 and lower than the voltage across the auxiliary-machine battery 22, for example.

The switching circuit 10B switches the connection state of the auxiliary power source 10A with respect to the first power source line L1 such that charging of the auxiliary power source 10A is performed on the basis of a command from the control circuit 10C. In other words, the switching circuit 10B opens and closes a charging path between the auxiliary power source 10A and the first power source line L1. The switching circuit 10B switches the power source of the first reaction force control unit 31A and the first turning control unit 32A between the main power source 20 and the auxiliary power source 10A on the basis of a command from the control circuit 10C. In other words, the switching circuit 10B opens and closes discharging paths between the auxiliary power source 10A and the third power source line L3 and between the auxiliary power source 10A and the fourth power source line L4. The switching circuit 10B opens and closes discharging paths between the auxiliary power source 10A and the fifth power source line L5 and between the auxiliary power source 10A and the sixth power source line L6.

The electricity of the main power source 20 or the auxiliary power source 10A switched by the switching circuit 10B is supplied to the first reaction force control unit 31A via the third power source line L3 and the fourth power source line L4. The electricity of the main power source 20 or the auxiliary power source 10A switched by the switching circuit 10B is supplied to the first turning control unit 32A via the fifth power source line L5 and the sixth power source line L6.

The control circuit 10C has a processing circuit including any of following three configurations A1, A2, A3.

A1. One or more processors that operate in accordance with a computer program that is software. The processor includes a CPU and a memory.

A2. One or more dedicated hardware circuits such as an application-specific integrated circuit (ASIC) that executes at least some processing out of various processing.

A3. A hardware circuit obtained by combining the two configurations A1, A2.

The memory is a medium that can be read out by a computer and stores therein a program in which processing or an instruction with respect to the computer is written. In the present embodiment, the computer is a CPU. The memory includes a RAM and a ROM. The CPU executes various control by executing the program stored in the memory at a fixed operation period.

The control circuit 10C controls the switching of the switching circuit 10B. The control circuit 10C monitors the voltage across the main power source 20. The control circuit 10C determines that the voltage across the main power source 20 has decreased when the value of the voltage across the main power source 20 is smaller than a voltage threshold. The voltage threshold is a reference at the time of determining the decrease of the voltage across the main power source 20. The voltage threshold is set with reference to a lower limit value of the voltage necessary for suitably operating the reaction force motor 41 and the turning motor 42, and the first reaction force control unit 31A and the first turning control unit 32A.

The control circuit 10C generates a first command with respect to the switching circuit 10B when the decrease of the voltage across the main power source 20 is not detected. The first command is a command for switching the power source of the first reaction force control unit 31A and the first turning control unit 32A to the main power source 20. The first command is also a command for switching the connection state of the auxiliary power source 10A with respect to the first power source line L1 such that the charging of the auxiliary power source 10A is performed.

The control circuit 10C generates a second command with respect to the switching circuit 10B when the decrease of the voltage across the main power source 20 is detected. The second command is a command for switching the power source of the first reaction force control unit 31A and the first turning control unit 32A from the main power source 20 to the auxiliary power source 10A. The second command is also a command for switching the connection state of the auxiliary power source 10A with respect to the first power source line L1 such that the charging of the auxiliary power source 10A is not performed.

The control circuit 10C detects the charging amount of the auxiliary power source 10A. The control circuit 10C detects the voltage across the auxiliary power source 10A through a voltage sensor provided in the auxiliary power source 10A and detects the charging amount of the auxiliary power source 10A on the basis of the detected voltage. The voltage is voltage across terminals of the auxiliary power source 10A. The control circuit 10C determines that the charging amount of the auxiliary power source 10A is insufficient when the value of the voltage across the auxiliary power source 10A is smaller than a voltage threshold. The control circuit 10C determines that the charging amount of the auxiliary power source 10A is sufficient when the value of the voltage across the auxiliary power source 10A is equal to or more than the voltage threshold. The voltage threshold is a reference at the time of determining whether the charging amount of the auxiliary power source 10A is sufficient. The voltage threshold is set with reference to a lower limit value of the voltage necessary for suitably operating the reaction force motor 41 and the turning motor 42, and the first reaction force control unit 31A and the first turning control unit 32A.

Processing of Control Circuit 10C

Next, one example of processing executed by the control circuit 10C is described. The power switch 23 is turned OFF as an initial state. The charging path between the auxiliary power source 10A and the first power source line L1 is opened. The discharging paths between the auxiliary power source 10A and the third power source line L3 and between the auxiliary power source 10A and the fourth power source line L4 are opened. The discharging paths between the auxiliary power source 10A and the fifth power source line L5 and between the auxiliary power source 10A and the sixth power source line L6 are also opened.

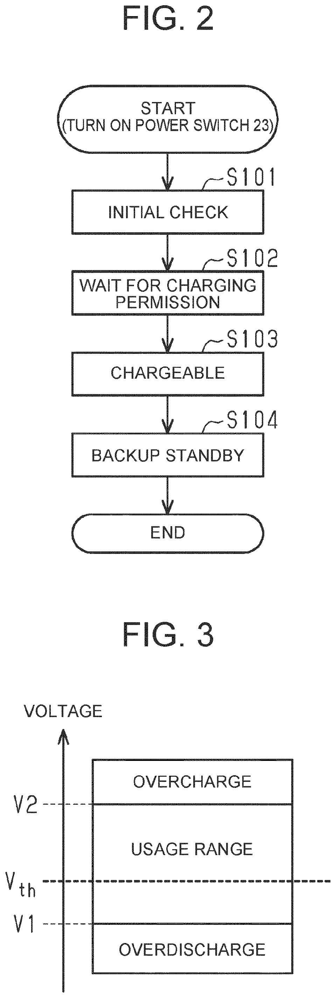

As shown in a flowchart of FIG. 2, the control circuit 10C executes an initial check when the power switch 23 is turned ON (Step S101). The initial check is an initial-stage inspection at the time of activation of the power source apparatus 10 and is a series of processing necessary for the power source apparatus 10 to operate. The initial check includes processing such as the check of hardware and initialization of the central processing unit (CPU), for example.

The control circuit 10C transitions to a charging permission waiting state after the execution of the initial check is normally completed (Step S102). The charging permission waiting state is a state in which the charging of the auxiliary power source 10A is not permitted and is a state of waiting for the activation of the DC-DC converter 21, in other words, waiting for the traveling preparation of the vehicle to be completed. This provides for reduction of the load, in other words, the electricity consumption of the auxiliary-machine battery 22 before the DC-DC converter 21 is activated. The electricity from the DC-DC converter 21 is not charged to the auxiliary-machine battery 22 until the DC-DC converter 21 is activated.

The vehicle has a higher-level control apparatus 50. The higher-level control apparatus 50 performs integrated control of control apparatuses of various in-vehicle systems including the steering control device 30. The higher-level control apparatus 50 executes the traveling preparation of the vehicle after the execution of the initial check is completed when the power switch 23 is turned ON. The traveling preparation includes the initial check by the higher-level control apparatus 50, starting processing of a power train of the vehicle, and activation processing of the DC-DC converter 21, for example. The higher-level control apparatus 50 transmits an assistance starting permission signal S1 to the first reaction force control unit 31A when the traveling preparation of the vehicle is completed and the vehicle is placed in a travelable state.

The first reaction force control unit 31A transitions to an assistance starting waiting state after the execution of the initial check is completed when the power switch 23 is turned ON. The assistance starting waiting state is a state of waiting for the traveling preparation of the vehicle to be completed and the vehicle to be placed in a travelable state. The first reaction force control unit 31A transitions to an assistance starting state when the assistance starting permission signal S1 is received in the assistance starting waiting state. The assistance starting state is a state in which the control of the steering reaction force by the reaction force motor 41 is executable. The first reaction force control unit 31A transmits a charging permission signal S2 to the control circuit 10C when transition is made to the assistance starting state.

The transition of the state of the first reaction force control unit 31A to the assistance starting state is transmitted to the second reaction force control unit 31B, the first turning control unit 32A, and the second turning control unit 32B. Therefore, the state of the second reaction force control unit 31B, the first turning control unit 32A, and the second turning control unit 32B also transitions to the assistance starting state at a timing at which the state of the first reaction force control unit 31A transitions to the assistance starting state.

The control circuit 10C recognizes that the DC-DC converter 21 is activated when the charging permission signal S2 is received in a state of standing by for the DC-DC converter 21 to be activated. The charging permission signal S2 is an electric signal indicating that the traveling preparation of the vehicle is completed and the DC-DC converter 21 is activated. The control circuit 10C transitions to a chargeable state when the control circuit 10C recognizes that the DC-DC converter 21 is activated (Step S103).

The chargeable state is a state in which the charging of the auxiliary power source 10A is permitted and a state in which the charging of the auxiliary power source 10A can be started. When the control circuit 10C transitions to the chargeable state, the control circuit 10C checks the charging state of the auxiliary power source 10A and determines whether the charging amount of the auxiliary power source 10A is sufficient to backup the electricity feeding to the first reaction force control unit 31A and the first turning control unit 32A.

When it is determined that the charging amount of the auxiliary power source 10A is not sufficient on the basis of the voltage across the auxiliary power source 10A, the control circuit 10C starts the charging of the auxiliary power source 10A and waits for the charging amount of the auxiliary power source 10A to reach a sufficient amount. When it is determined that the charging amount of the auxiliary power source 10A is sufficient, the control circuit 10C recognizes that a state in which the backup of the electricity feeding to the first reaction force control unit 31A and the first turning control unit 32A is possible is obtained.

When it is determined that the charging amount of the auxiliary power source 10A is sufficient, the control circuit 10C stops the charging of the auxiliary power source 10A, transitions to a backup standby state (Step S104), and ends the processing. The backup standby state is a state in which the power source apparatus 10 can backup the electricity feeding to the first reaction force control unit 31A and the first turning control unit 32A and is a state in which the power source apparatus 10 is standing by to backup the electricity feeding to the first reaction force control unit 31A and the first turning control unit 32A. When the power source apparatus 10 is maintained in the backup standby state, the voltage across the main power source 20 has not decreased, and electricity is supplied to the steering control device 30 from the main power source 20.

Overdischarge Reduction Processing

The power source apparatus 10 configured as above has following concerns. For example, the charging of the auxiliary power source 10A is not permitted until the DC-DC converter 21 is activated, in other words, the traveling preparation of the vehicle by the higher-level control apparatus 50 is completed. Therefore, when the DC-DC converter 21 is not activated for a long period of time for some reason, there is a fear that discharging or electricity consumption of the auxiliary power source 10A progresses and the auxiliary power source 10A reaches an overdischarged state.

Thus, the control circuit 10C executes the following processing in order to reduce the overdischarge of the auxiliary power source 10A. In other words, when the control circuit 10C transitions to the charging permission waiting state (Step S102), the control circuit 10C transitions to a chargeable state (Step S103) even when the traveling preparation of the vehicle is not completed when both of a first condition B1 and a second condition B2 are satisfied. The control circuit 10C can recognize that the traveling preparation of the vehicle is not completed by not receiving the charging permission signal S2.

$$B1.\ \Delta T \geq \Delta T_{th}$$

$$B2.\ V < V_{th}$$

Note that "$\Delta T$" is an amount of elapsed time from when transition is made to the charging permission waiting state. The amount of elapsed time $\Delta T$ is also an amount of elapsed time from when the initial check is completed. Here, "$\Delta T_{th}$" is a time threshold. Here, "$V$" is the voltage across the auxiliary power source 10A. Here, "$V_{th}$" is a voltage threshold.

As shown in FIG. 3, the voltage threshold $V_{th}$ is set to minimum voltage value necessary for the backup of the main power source 20. The voltage threshold $V_{th}$ is set to a value that is greater than first voltage V1 at which the auxiliary power source 10A is overdischarged and smaller than second voltage V2 at which the auxiliary power source 10A is overcharged. A voltage range less than the first voltage V1 is an overdischarge range, and a voltage range exceeding the second voltage V2 is an overcharge range. Those voltage ranges are voltage ranges in which the deterioration of the auxiliary power source 10A is concerned. The usage range of the voltage across the auxiliary power source 10A is equal to or more than the first voltage V1 and equal to or less than the second voltage V2.

A voltage range equal to or more than the first voltage V1 and less than the voltage threshold $V_{th}$ is an allowance until the auxiliary power source 10A reaches the overdischarged state. This is based on a viewpoint of preventing the auxiliary power source 10A from reaching the overdischarged state in a period of time from when the control circuit 10C transitions to the charging permission waiting state to when the amount of elapsed time reaches the time threshold $\Delta T_{th}$. A voltage range equal to or more than the voltage threshold $V_{th}$ and equal to or less than the second voltage V2 is a voltage range in which own energy is used. This is based on a viewpoint of reducing the load of the main power source 20.

Effects of Embodiment

The present embodiment exhibits effects below.

(1) A case in which the traveling preparation of the vehicle is not completed for a long period of time for some reason is conceived. In this case, discharging or electricity consumption of the auxiliary power source 10A progresses, and there is a fear that the auxiliary power source 10A reaches an overdischarged state in a period of time from when the power switch 23 is turned ON to when the traveling preparation of the vehicle is completed. Regarding this point, according to the present embodiment, the control circuit 10C charges, after the completion of the initial check, the auxiliary power source 10A when both of the first condition in which the amount

of elapsed time $\Delta T$ from when the initial check is completed is equal to or more than the time threshold $\Delta T_{th}$ and the second condition in which the voltage V across the auxiliary power source 10A is less than the voltage threshold $V_{th}$ are satisfied even before the completion of the traveling preparation of the vehicle. Therefore, cases in which the discharging or the electricity consumption of the auxiliary power source 10A progresses and the auxiliary power source 10A reaches the overdischarged state in the period of time from when the power switch 23 is turned ON to when the traveling preparation of the vehicle is completed can be reduced. Therefore, the deterioration of the auxiliary power source 10A due to overdischarge can be reduced.

(2) The auxiliary power source 10A has output voltage lower than the output voltage across the main power source 20 of the vehicle and is charged by the voltage across the main power source 20 stepped down by the in-vehicle DC-DC converter 21. The traveling preparation of the vehicle includes the activation processing of the DC-DC converter 21. According to this configuration, the auxiliary power source 10A is charged by the voltage across the main power source 20 stepped down by the DC-DC converter 21. Therefore, it is basically preferred that the auxiliary power source 10A be charged after the activation of the DC-DC converter 21 is waited for when the power switch 23 is turned ON.

(3) The auxiliary power source 10A is charged by the electricity of the main power source 20. Therefore, the electricity of the main power source 20 is consumed when the auxiliary power source 10A is charged. Regarding this point, according to the present embodiment, the voltage threshold $V_{th}$ is set to the minimum voltage value necessary for the backup of the main power source 20. Therefore, a period of time from when the initial check by the control circuit 10C is completed to when the second condition in which the voltage across the auxiliary power source 10A is less than the voltage threshold $V_{th}$ is satisfied can be caused to be longer as compared to a case in which the voltage threshold $V_{th}$ is set to a value greater than the minimum voltage value necessary for the backup of the main power source 20, for example. Therefore, the electricity consumption of the main power source 20 can be reduced, in other words, the load of the main power source 20 can be decreased before the activation of the DC-DC converter 21.

(4) The steering control device 30 that is one of the control apparatuses of the vehicle transmits the charging permission signal S2 to the control circuit 10C when the traveling preparation of the vehicle is completed. The control circuit 10C recognizes that the traveling preparation of the vehicle is completed when the charging permission signal S2 is received. According to this configuration, the control circuit 10C can easily recognize that the traveling preparation of the vehicle is completed by receiving the charging permission signal S2 from the steering control device 30.

(5) The steering control device 30 controls the motor that is the driving source of the steering apparatus of the vehicle. A higher reliability is required for the steering control device 30. The power source apparatus 10 of the present embodiment is suitable for the steering control device 30.

Other Embodiments

The present embodiment may be carried out by being changed as follows.

The control circuit 10C may transition to the chargeable state of the auxiliary power source 10A after the completion of the initial check as long as the DC-DC converter 21 is activated even when not all of the traveling preparation of the vehicle is completed. In this case, the control circuit 10C may acquire a signal indicating the activation state of the DC-DC converter 21 from the higher-level control apparatus 50 or from the DC-DC converter 21.

A motor having one system of winding group may be employed as the reaction force motor 41 and the turning motor 42. In this case, a configuration of having only one of the first reaction force control unit 31A and the second reaction force control unit 31B can be employed as the reaction force control apparatus 31. A configuration of having only one of the first turning control unit 32A and the second turning control unit 32B can be employed as the turning control apparatus 32.

The control target of the steering control device 30 may be an assistance motor that is a driving source of an electric power steering apparatus. The assistance motor is a generation source of the assistance force. The assistance force is a force in the same direction as the operation direction of the steering wheel. A motor having one system of winding group may be employed or a motor having two systems of winding groups may be employed as the assistance motor.

The electricity feeding target of the power source apparatus 10 is not limited to the steering control device 30. The electricity feeding target may be a control apparatus that controls driving of a traveling motor of a battery electric vehicle (electric vehicle) or a hybrid car (hybrid electric vehicle). The electricity feeding target may be a control apparatus that controls a brake of a vehicle.

**Claims**

1. A power source apparatus (10), comprising:

   an auxiliary power source (10A) configured to backup an in-vehicle main power source (20) configured to supply electricity to an electricity feeding target; and

a control circuit (10C) configured to:

control charging of the auxiliary power source (10A) by electricity from the main power source (20) and discharging of the auxiliary power source (10A);

execute an initial check that is an initial-stage inspection at a time of activation when a power switch of a vehicle is turned ON;

after completion of the initial check, charge the auxiliary power source (10A) after waiting for traveling preparation of the vehicle to be completed; and

after the completion of the initial check, charge the auxiliary power source (10A) when both of a first condition and a second condition are satisfied even before the completion of the traveling preparation of the vehicle, wherein:

the first condition is a condition in which an amount of elapsed time from when the initial check is completed is equal to or more than a time threshold; and

the second condition is a condition in which voltage across the auxiliary power source (10A) is less than a voltage threshold.

2. The power source apparatus (10) according to claim 1, wherein:

the auxiliary power source (10A) has output voltage lower than output voltage of the main power source (20) and is configured to be charged by voltage across the main power source (20) stepped down by an in-vehicle DC-DC converter (21); and

the traveling preparation of the vehicle includes activation processing of the DC-DC converter (21).

3. The power source apparatus (10) according to claim 1 or 2, wherein the voltage threshold is set to a minimum voltage value necessary for backup of the main power source (20).

4. The power source apparatus (10) according to claim 1 or 2, wherein:

the electricity feeding target is a control apparatus of the vehicle configured to transmit a charging permission signal to the control circuit (10C) when the traveling preparation of the vehicle is completed; and

the control circuit (10C) is configured to recognize that the traveling preparation of the vehicle is completed when the charging permission signal is received.

5. The power source apparatus (10) according to claim 4, wherein the control apparatus is a steering control device configured to control a motor that is a driving source of a steering apparatus of the vehicle.

# FIG. 1

EP 4 497 638 A1

# FIG. 2

```
        ┌─────────────────────────────┐
        │          START              │
        │ (TURN ON POWER SWITCH 23)   │
        └─────────────────────────────┘
                      │
                      ▼        ～S101
        ┌─────────────────────────────┐
        │       INITIAL CHECK         │
        └─────────────────────────────┘
                      │
                      ▼        ～S102
        ┌─────────────────────────────┐
        │    WAIT FOR CHARGING        │
        │       PERMISSION            │
        └─────────────────────────────┘
                      │
                      ▼        ～S103
        ┌─────────────────────────────┐
        │        CHARGEABLE           │
        └─────────────────────────────┘
                      │
                      ▼        ～S104
        ┌─────────────────────────────┐
        │      BACKUP STANDBY         │
        └─────────────────────────────┘
                      │
                      ▼
        ┌─────────────────────────────┐
        │           END               │
        └─────────────────────────────┘
```

# FIG. 3

VOLTAGE

```
      ▲
      │      ┌──────────────────────┐
      │      │     OVERCHARGE       │
  V2 -│- - - ├──────────────────────┤
      │      │                      │
      │      │    USAGE RANGE       │
      │      │                      │
 Vth -│- - - ┼ - - - - - - - - - - -│- - - -
      │      │                      │
  V1 -│- - - ├──────────────────────┤
      │      │    OVERDISCHARGE     │
      │      └──────────────────────┘
      │
──────┼─────────────────────────────────────
```

Europäisches
Patentamt

European
Patent Office

Office européen
des brevets

# EUROPEAN SEARCH REPORT

**Application Number**

EP 24 19 0280

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 173 868 A1 (JTEKT CORP [JP]) 3 May 2023 (2023-05-03) * abstract; figures * * paragraphs [0005] - [0007] * * paragraphs [0055] - [0057] * * paragraphs [0064] - [0080] * ----- | 1-5 | INV. B60R16/033 B60L58/12 B60L58/14 B62D5/04 |
| A | US 2023/001978 A1 (SATOU ATSUSHI [JP] ET AL) 5 January 2023 (2023-01-05) * abstract; figure 2 * * paragraphs [0051] - [0057] * ----- | 1,2 | |

**TECHNICAL FIELDS SEARCHED (IPC)**

B60L
B62D
B60R
B60D
H02J

The present search report has been drawn up for all claims

| Place of search | Date of completion of the search | Examiner |
|---|---|---|
| The Hague | 18 December 2024 | Buron, Emmanuel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

**EP 4 497 638 A1**

## ANNEX TO THE EUROPEAN SEARCH REPORT
## ON EUROPEAN PATENT APPLICATION NO.

EP 24 19 0280

18-12-2024

| Patent document cited in search report | | Publication date | Patent family member(s) | | Publication date |
|---|---|---|---|---|---|
| EP 4173868 | A1 | 03-05-2023 | CN | 116022228 A | 28-04-2023 |
| | | | EP | 4173868 A1 | 03-05-2023 |
| | | | JP | 2023064437 A | 11-05-2023 |
| | | | US | 2023126878 A1 | 27-04-2023 |
| US 2023001978 | A1 | 05-01-2023 | CN | 115556688 A | 03-01-2023 |
| | | | JP | 2023007759 A | 19-01-2023 |
| | | | US | 2023001978 A1 | 05-01-2023 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023018841 A